Europäisches Patentamt

European Patent Office

Office européen des brevets

(19)

(11) Veröffentlichungsnummer: **0 238 875**
**B1**

(12) **EUROPÄISCHE PATENTSCHRIFT**

(45) Veröffentlichungstag der Patentschrift:
**16.08.89**

(21) Anmeldenummer: **87102626.6**

(22) Anmeldetag: **24.02.87**

(51) Int. Cl.⁴: **A 01 B 63/112**, G 01 L 5/13

(54) Regelvorrichtung mit mindestens einem Kraftsensor zum Erfassen von Zug- und Druckkräften an einem Zuglenker.

(30) Priorität: **27.02.86 US 834002**

(43) Veröffentlichungstag der Anmeldung:
**30.09.87 Patentblatt 87/40**

(45) Bekanntmachung des Hinweises auf die Patenterteilung:
**16.08.89 Patentblatt 89/33**

(84) Benannte Vertragsstaaten:
**AT BE CH DE ES FR GB IT LI SE**

(56) Entgegenhaltungen:
**EP-A- 0 150 224**
**EP-A- 0 173 010**
**DE-A- 3 147 740**
**DE-B- 1 183 295**
**US-A- 4 367 656**

(73) Patentinhaber: **DEERE & COMPANY, 1 John Deere Road,
Moline Illinois 61265 (US)**

(72) Erfinder: **Kittle, Carl Edwin, 2312 Primrose, Cedar Falls
Iowa 50703 (US)**
Erfinder: **LaFave, Arthur Joseph, 1951 Fairview,
Waterloo Iowa 50703 (US)**
Erfinder: **Olson, David LaMoyne, 3426 Rosehill Terrace,
Waterloo Iowa 50703 (US)**

(74) Vertreter: **Feldmann, Bernhard, DEERE & COMPANY
European Office, Patent Department
Steubenstrasse 36-42 Postfach 50̄0,
D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Regelvorrichtung mit mindestens einem Kraftsensor zum Erfassen von Zug- und Druckkräften an einem Zuglenker, insbesondere einem Zuglenker einer Hubvorrichtung an Ackerschleppern, der auf einem Lagerbolzen angeordnet ist, der in einem mit dem Fahrzeugrahmen verbundenen Ausleger gelagert ist.

Derartige Regelvorrichtungen finden für die Widerstandsregelung bei Ackerschleppern Verwendung, wobei bei auftretenden Zug- oder Druckkräften, insbesondere in den unteren Lenkern, ein elektrischer Impuls ausgelöst wird, der letztlich ein Steuerventil schaltet, über das dann die unteren Lenker angehoben oder abgesenkt werden, damit die Zugkraft an den Zuglenkern immer konstant gehalten wird. Die Folge davon ist, daß das angehängte bzw. angebaute Gerät, beispielsweise ein Pflug, in seiner Arbeitstiefe automatisch verstellt wird. Bei der Regelvorrichtung, von der die Erfindung ausgeht (Prospekt Fendt Favorit 611 bis 615 LSA Turbo, Druckvermerk E5-84-40), ist je ein Kraftsensor in den Lagerbolzen für die beiden unteren Lenker vorgesehen. Hierdurch müssen die Lagerbolzen zur Aufnahme der Kraftsensoren entsprechend ausgebildet werden und müssen, da die Lagerbolzen naturgemäß großen Kräften ausgesetzt sind, bei Verschleiß zusammen mit dem Kraftsensor ausgewechselt werden. Hierdurch wird die Wartung erheblich verteuert, wobei hinzu kommt, daß die Lagerbolzen mit den Kraftsensoren nicht billig herzustellen sind und den äußeren Einflüssen ungeschützt ausgesetzt sind.

Bei einer anderen bekannten Regelvorrichtung (EP-A-0 150 224) ist ein Biegestab vorgesehen, der sich quer durch ein Getriebegehäuse erstreckt, endseitig aus diesem austritt und hier in mit dem Getriebegehäuse verbundenen Auslegern gelagert ist. Im Bereich der Ausleger sind auf dem Biegestab beiderseits des Getriebegehäuses die Zuglenker angeordnet, die bei auftretenden Zug- oder Druckkräften eine Ausbiegung des Biegestabes hervorrufen, welche von einem Regelgestänge im Getriebegehäuse erfaßt, auf ein Ventil übertragen werden und ein Anheben oder Absenken der Zuglenker hervorrufen. Bei dieser Regelvorrichtung dienen die Ausleger dazu, Auflager aufzunehmen, die die bei der Durchbiegung des Biegestabes entstehenden Reibungskräfte und Flächenpressungen aufnehmen.

Die mit der Erfindung zu lösende Aufgabe wird darin gesehen, die Kraftsensoren unabhängig von den Lagerbolzen einzusetzen, wobei insbesondere handelsübliche Kraftsensoren Verwendung finden können. Diese Aufgabe ist nach der Erfindung durch eine sich in Fahrtrichtung des Fahrzeuges erstreckende Sensorschiene gelöst worden, die einenends an dem Ausleger angreift, anderenends mit dem Lagerbolzen fest verbunden ist und den Kraftsensor aufnimmt. Auf diese Weise ist der Kraftsensor unabhängig von dem den Umwelteinflüssen ausgesetzten Lagerbolzen angeordnet, und handelsübliche und damit relativ billige Kraftsensoren können Verwendung finden.

Nach der Erfindung kann die Anordnung des Kraftsensors in einfacher Weise dadurch erreicht werden, daß die Sensorschiene zur Aufnahme des Kraftsensors eine Bohrung aufweist. Erfindungsgemäß kann der Kraftsensor relativ leicht ansprechbar sein, wenn die Steuerschiene ein Mittelteil mit der Bohrung für den Kraftsensor und sich daran über Halsstücke anschließende Endteile aufweist, wobei die Endteile eine größere Höhe als der Mittelteil aufweisen. Damit hat die Steuerschiene eine hantelähnliche Form, über die sich die von den Zug- und Druckkräften aus den Zuglenkern herrührenden Bewegungen der Lagerbolzen leicht auf die Steuerschiene und letztlich auf den Kraftsensor übertragen lassen.

Zweckmäßig kann nach einem weiteren Merkmal der Erfindung der Ausleger u-förmig mit sich in Fahrtrichtung erstreckenden Schenkeln ausgebildet sein, wobei die Sensorschiene parallel neben einem Schenkel verläuft, zwischen einem oberen und einem unteren mit diesem Schenkel verbundenen Wandteil angeordnet ist und durch einen mit den Wandteilen verbindbaren Deckel abgedeckt wird. Somit kann die Sensorschiene mehr oder weniger geschützt angeordnet werden, so daß sie den äußeren Umwelteinflüssen nicht ausgesetzt wird.

In der Zeichnung ist ein nachfolgend näher erläutertes Ausführungsbeispiel der Erfindung dargestellt. Es zeigt:

Fig. 1 einen Ausschnitt aus der Heckseite eines Ackerschleppers mit der angebauten Regelvorrichtung,

Fig. 2 die Regelvorrichtung im Schnitt und in Draufsicht,

Fig. 3 den die Sensorschiene aufnehmenden Ausleger ebenfalls in der Draufsicht,

Fig. 4 den Ausleger nach Fig. 3 in Seitenansicht und

Fig. 5 die Sensorschiene in Seitenansicht,

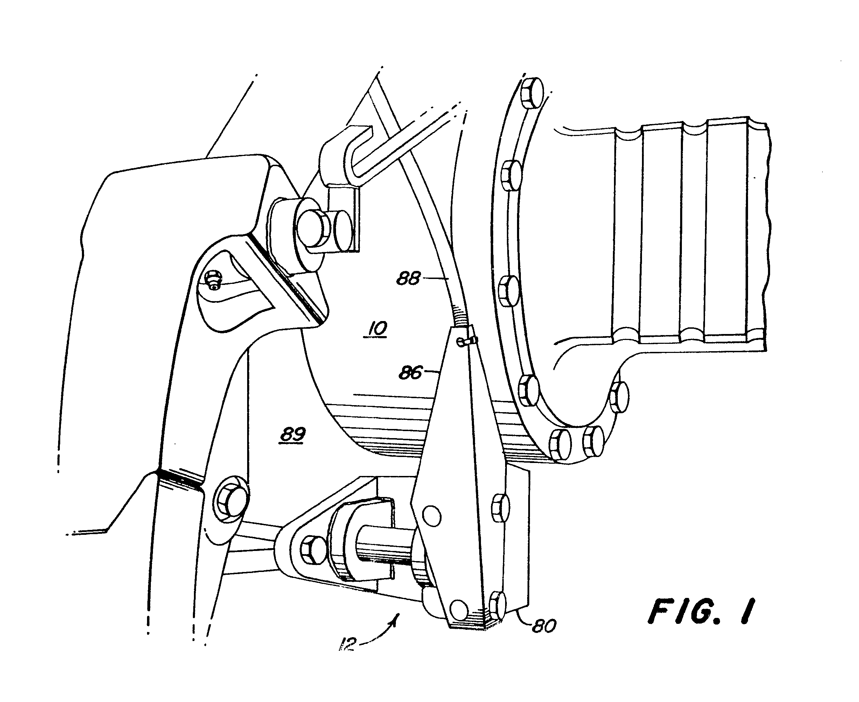

In Fig. 1 der Zeichnung ist ein Ausschnitt aus dem rechten Teil eines weiter nicht dargestellten Ackerschleppers dargestellt, dessen Tragachse mit 10 bezeichnet ist. Die Regelvorrichtung 12 nach der vorliegenden Erfindung ist an einem Fahrzeugrahmen 89 bzw. an einem Getriebegehäuse des Ackerschleppers im wesentlichen unterhalb und rückwärtig der Hinterachse angeordnet. Lediglich die rechte Regelvorrichtung ist in Fig. 1 dargestellt, wobei darauf hingewiesen wird, daß eine ähnliche Regelvorrichtung auch auf der linken nicht dargestellten Heckseite an dem Fahrzeugrahmen 89 vorzusehen ist.

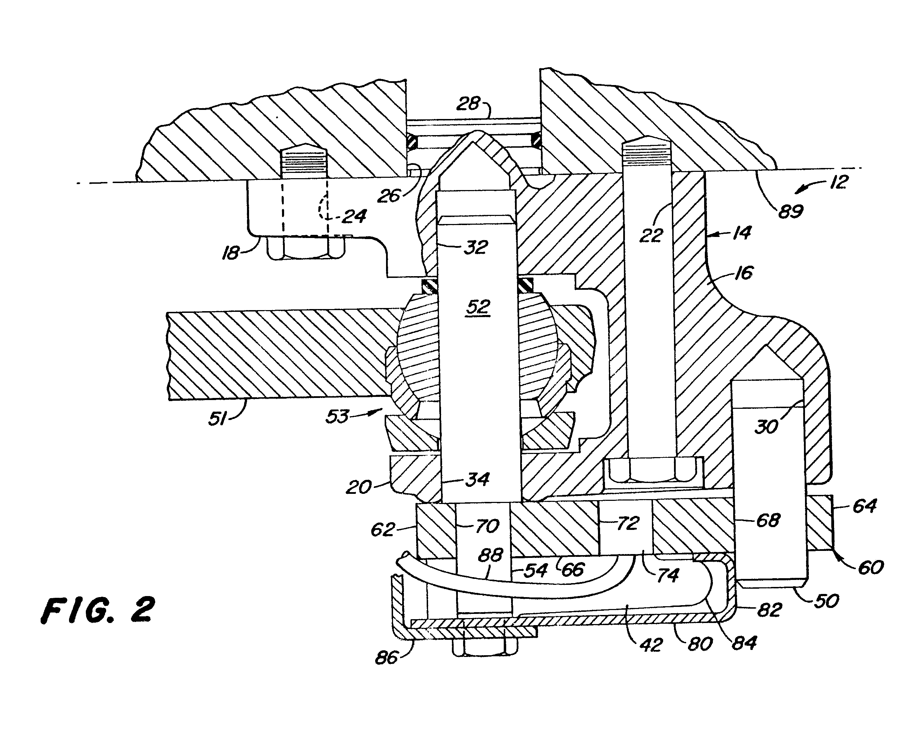

Insbesondere aus den Fig. 2 bis 4 geht hervor, daß die Regelvorrichtung 12 in einem u-förmig ausgebildeten Ausleger 14 angeordnet ist, der damit einen Steg 16 aufweist, von dem aus sich innere und äußere Schenkel 18 und 20 nach rückwärts erstrecken. Der Steg 16 ist mit einer Bohrung 22 und der Schenkel 18 mit einer Bohrung 24 versehen, die beide zur Befestigung des Auslegers mit dem Fahrzeugrahmen 89 bzw. dem Getriebegehäuse über Schrauben dienen. Damit der Ausleger 14 richtig angeordnet werden kann, weist der Fahrzeugrahmen 89 vorzugsweise eine Standortbohrung 26 auf, in die ein mit dem Ausleger 14 verbundener Richtbolzen 28 eingesetzt werden kann.

Der Ausleger 14 ist an einer Seite aufgebohrt, so daß sich von dieser Seite eine Bohrung 30 in den Steg 16 erstreckt, wobei diese Bohrung dem Fahrzeugrahmen 89 abgelegen ist. Eine weitere Bohrung 32 erstreckt sich durch den inneren Schenkel 18 und teilweise noch in den Richtbolzen 28. Eine weitere Bohrung 34 erstreckt sich durch den äußeren Schenkel 20 und ist koaxial ausgerichtet zu der Bohrung 32, wobei der Durchmesser der Bohrung 34 etwas größer als der der Bohrung 32 ist.

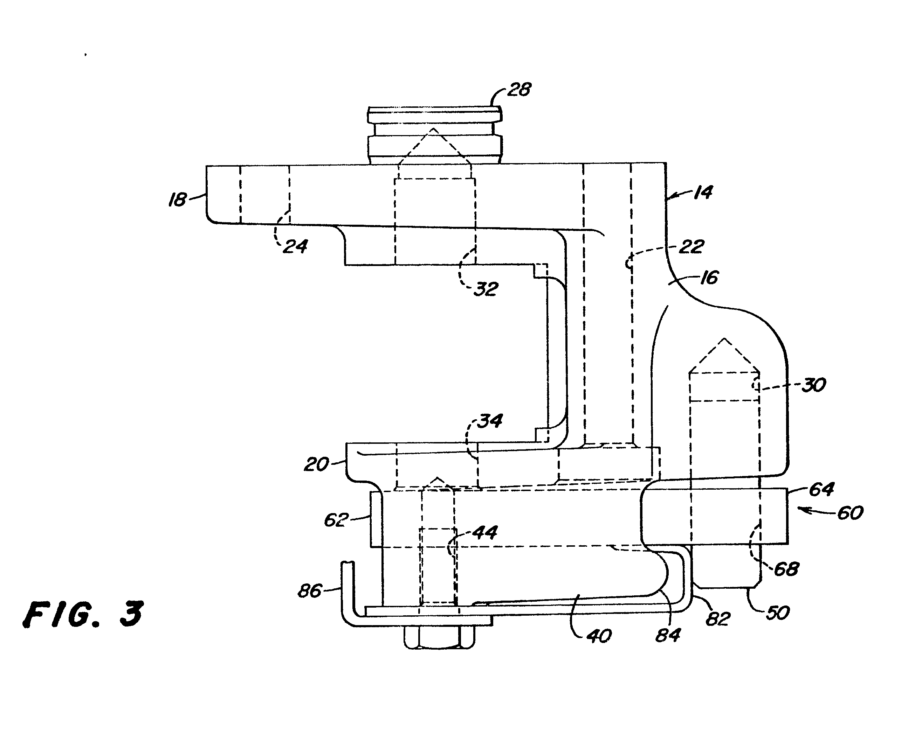

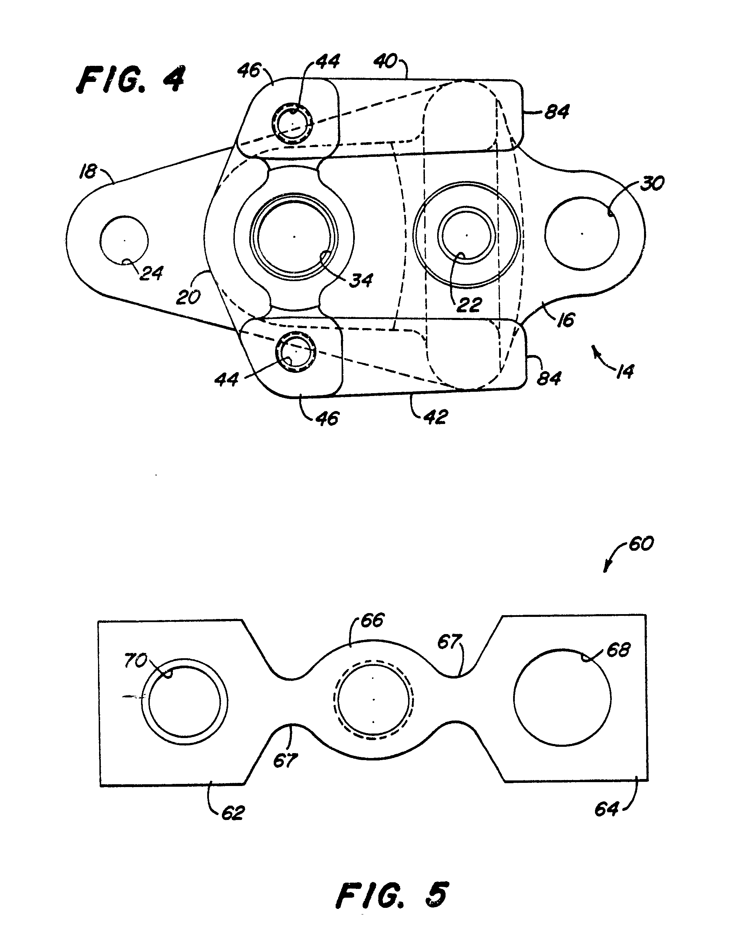

Wie am besten aus den Fig. 3 und 4 hervorgeht, so sind ein oberes und ein unteres Wandteil 40 und 42 an dem Schenkel 20 vorgesehen und erstrecken sich von diesem nach außen. Aus Fig. 4 ist zu ersehen, daß die Wandteile 40 und 42 sich im wesentlichen in der Längsachse des Fahrzeuges erstrecken und mit Abstand an den sich gegenüberliegenden Seiten des äußeren Schenkels 20 vorgesehen sind. Jeder Wandteil weist eine Gewindebohrung 44 in einem hochstehenden Wulstteil 46 im Bereich der rückwärtigen Enden auf.

Ein Regelstift 50 ist mittels eines Pressitzes in die Bohrung 30 eingesetzt und steht aus dieser nach außen über. Ein Lagerbolzen 52 ist in die Bohrungen 32 und 34 eingesetzt, wobei der Lagerbolzen 52 einen Schaft 54 mit reduziertem Durchmesser aufweist, der nach außen aus der Bohrung 34 übersteht. Der sich zwischen den Schenkeln 18 und 20 befindliche Teil des Lagerbolzens 52 dient zur Aufnahme des vorderen Endes eines sich in Längsrichtung des Fahrzeuges erstreckenden Zuglenker 51, beispielsweise eines unteren Lenkers, über eine herkömmliche Lagereinrichtung 53.

Aus den Fig. 2 und 5 wiederum geht hervor, daß die Regelvorrichtung 12 noch mit einer Sensorschiene 60 bzw. einer Sensorstange versehen ist, die zwischen den Wandteilen 40 und 42 angeordnet ist. Aus Fig. 5 ist die Form der Sensorschiene 60 erkennbar, die, wie man aus ihr ersieht, eine hantelähnliche Form mit größeren im wesentlichen rechteckigen Endteilen 62 und 64 und einen Mittenteil 66 hat, der abgerundet ist und kleiner ist als die Endteile. Der Mittenteil 66 ist mit den Endteilen 62 und 64 über einen eingeschnürten Halsteil 67 jeweils verbunden. Die Form der Sensorschiene 60 verbessert die Deformation des Mittenteiles für eine gegebene Kraft, die über den Lagerbolzen 52 übertragen wird, wodurch die Sensibilität der Messung vergrößert wird. Die Sensorschiene 60 ist an das vordere Ende des Auslegers 14 über den Regelstift 50 angeschlossen, der über eine Spielpassung in eine Bohrung 68 in dem vorderen Ende 64 der Sensorschiene 60 eingesetzt ist. Das rückwärtige Ende 62 der Sensorschiene 60 ist ebenfalls mit einer Bohrung 70 versehen, in die der Schaft 54 des Lagerbolzens 52 über einen Pressitz eingesetzt ist. Eine Bohrung 72 erstreckt sich durch den Mittenteil 66 und dient zur Aufnahme eines bekannten zylinderförmig ausgebildeten Kraftsensors 74, wie er beispielsweise in dem Dokument US-A-4 530 425 beschrieben ist. Das Spiel zwischen dem Lagerbolzen 52 und der Bohrung 34 ist größer als das Spiel zwischen dem Regelstift 50 und der Bohrung 68, so daß sich in Fahrzeuglängsrichtung auswirkende Kräfte, die auf den Lagerbolzen 52 einwirken, auf die Sensorschiene 60 übertragen lassen. Ein Deckel 80 ist an dem Ausleger 14 über Schrauben befestigt, die in die Gewindebohrungen 44 in den Wandteilen 40 und 42 einsetzbar sind. Das vordere Ende des Deckels 80 ist mit einer Lippe 82 versehen, die wiederum rechtwinklig abgebogen ist. Die Lippe 80 kann lösbar einen überhängenden Ansatzteil 84 der Wandteile 40 und 42 übergreifen. Die Lippe 82 liegt gleichfalls gegen den Regelstift 50 an und wird über ihn in ihrer Position gehalten. Die den Deckel befestigenden Schrauben befestigen gleichfalls noch ein Schild 86 an dem Ausleger 14. Das Schild 86 dient zur Führung und zur Abdeckung eines Kabels 88, das von dem Kraftsensor 74 zu einer in der Zeichnung der Einfachheit halber nicht dargestellten Steuervorrichtung zur Übertragung der elektrischen Impulse führt. Der Deckel 50 ist so ausgebildet, daß er seitlichen Kräften entgegenwirkt, die von dem Zuglenker 51 bei einer Seitenbewegung des nicht gezeigten Gerätes herrühren können.

Zug- und Druckkräfte oder in Längsrichtung des Fahrzeuges wirkende Kräfte, die auf den Zuglenker 51 einwirken, werden auf die Sensorschiene 60 über den Lagerbolzen 52 und seinen Schaft 54 übertragen, so daß die Sensorschiene 60 sowohl Druck- als auch Zugkräften unterworfen ist. Diese Kräfte wiederum wirken sich als in Längsrichtung verlaufende Kräfte in der Sensorschiene 60 aus und werden von dem Kraftsensor 54 erfaßt, der seinerseits ein Signal produziert, das diesen Kräften entspricht. Dieses Signal entspricht daher den Zug- und Druckkräften in dem Zuglenker und wird auf die Steuervorrichtung übertragen, wodurch ein Regelvorgang ausgelöst wird.

**Patentansprüche**

1. Regelvorrichtung mit mindestens einem Kraftsensor (74) zum Erfassen von Zug- und Druckkräften an einem Zuglenker (51), insbesondere einem Zuglenker (51) einer Hubvorrichtung an Ackerschleppern, der auf einem Lagerbolzen (52) angeordnet ist, der in einem mit dem Fahrzeugrahmen (89) verbundenen Ausleger (14) gelagert ist, gekennzeichnet durch eine sich in Fahrtrichtung des Fahrzeuges erstreckende Sensorschiene (60), die einenends an dem Ausleger (14) angreift, anderenends mit dem Lagerbolzen (52) fest verbunden ist und den Kraftsensor (74) aufnimmt.

2. Regelvorrichtung nach Anspruch 1, dadurch gekennzeichnet, daß die Sensorschiene (60) zur Aufnahme des Kraftsensors (74) eine Bohrung (72) aufweist.

3. Regelvorrichtung nach Anspruch 1 und 2, dadurch gekennzeichnet, daß die Sensorschiene (60) einen Mittenteil (66) mit der Bohrung (72) für den Kraftsensor (74) und sich daran über Halsstücke (67) anschließende Endteile (62, 64) aufweist, wobei die Endteile (62, 64) eine größere Höhe als der Mittenteil (66) aufweisen.

4. Regelvorrichtung nach einem oder mehreren der vorherigen Ansprüche, dadurch gekennzeichnet, daß der Ausleger (14) u-förmig mit sich in Fahrtrichtung erstreckenden Schenkeln (18, 20) ausgebildet ist und die Sensorschiene (60) parallel neben einem Schenkel (20) verläuft, wobei die Sensorschiene (60) zwischen einem oberen und einem unteren mit diesem Schenkel (20) verbundenen Wandteil (40, 42) angeordnet und durch einen mit den Wandteilen (40, 42) verbindbaren Deckel (80) abgedeckt ist.

## Claims

1. Control device with at least one force sensor (74) for detecting traction and compression forces in a traction link (51), in particular a traction link (51) of a lift device on agricultural tractors, which is arranged on a bearing pin (52), which is mounted in a bracket (14) connected to the vehicle frame (89), characterized by a sensor bar (60) extending in the direction of travel of the vehicle, which bar engages the bracket (14) at one end, is fixedly connected to the bearing pin (52) at the other end and carries the force sensor (74).

2. Control device according to claim 1, characterized in that the sensor bar (60) has a bore (72) to receive the force sensor (74).

3. Control device according to claims 1 and 2, characterized in that the sensor bar (60) comprises a middle part (66) with the bore (72) for the force sensor (74) and end parts (62, 64) connected thereto by neck parts (67), the end parts (62, 64) having a greater height than the middle part (66).

4. Control device according to one or more of the preceding claims, characterized in that the bracket (14) is U-shaped with arms (18, 20) exending in the direction of travel and the sensor bar (60) runs parallel alongside one arm (20), the sensor bar (60) being arranged between an upper and a lower wall part (40, 42) connected to this arm (20) and being covered by a cover (80) attachable to the wall parts (40, 42).

## Revendications

1. Dispositif de régulation comportant au moins un capteur de forces mécaniques (74) pour détecter des forces de traction et de compression sur un bras de traction (51), en particulier un bras de traction (51) d'un dispositif de levage sur tracteurs agricoles, qui est placé sur un axe de support (52) disposé dans une console (14) reliée aux châssis (89) du véhicule, caractérisé par une barre de détection (60) s'étendant dans la direction de déplacement du véhicule, qui s'applique par une extrémité à la console (14), est reliée rigidement à l'autre extrémité à l'axe de support (52) et loge le capteur de forces (74).

2. Dispositif de régulation suivant la revendication 1, caractérisé en ce que la barre de détection (60) comporte un alésage (72) pour loger le capteur de forces (74).

3. Dispositif de régulation suivant les revendications 1 et 2, caractérisé en ce que la barre de détection (60) comporte une partie centrale (66) pourvue de l'alésage (72) pour le capteur de forces (74) et des parties terminales (62, 64) qui s'y raccordent par l'intermédiaire de rétrécissements (67), les parties terminales (62, 64) présentant une plus grande hauteur que la partie centrale (66).

4. Dispositif de régulation suivant une ou plusieurs des revendications précédentes, caractérisé en ce que la console (14) est en U avec des branches (18, 20) s'étendant dans la direction de déplacement et la barre de détection (60) s'étend parallèlement à côté d'une branche (20), la barre de détection (60) étant placée entre une partie de paroi supérieure (40) et une partie de paroi inférieure (42) reliée à cette branche (20) et étant recouverte par un couvercle (80) pouvant être relié aux parties de paroi (40, 42).

FIG. 1

EP 0 238 875 B1

FIG. 2

EP 0 238 875 B1

FIG. 3

EP 0 238 875 B1

*FIG. 4*

*FIG. 5*

11